# FASCICULE DE BREVET EUROPEEN

(11) **EP 0 556 086 B1**
(45) Date de publication et mention de la délivrance du brevet: **17.07.1996**
(21) Numéro de dépôt: 93400250.2
(22) Date de dépôt: 02.02.1993
(51) Int. Cl.: B60G 17/056, F16K 3/10

(54) **Valve d'échappement et d'alimentation de fluide, notamment valve de nivellement pour suspension pneumatique et système de suspension utilisant de telles valves**
Ventil zum Auslassen und Einlassen eines Fluidums, insbesondere ein Niveauregelventil für eine Luftfederung und ein, ein solches Ventil benützendes, Federungssystem
Valve for exhaust and inlet of fluids, especially a levelling valve for air suspension and a suspension system using such a valve

(30) Priorité: 14.02.1992 FR 9201699
(43) Date de publication de la demande: 18.08.1993
(73) Titulaire: WABCO France, F-77410 Claye Souilly (FR)
(72) Inventeur: Lievoux, José, F-77165 Le Plessis-Leveque (FR); Tyssandier, Alain, F-77100 Meaux (FR)
(74) Mandataire: Hirsch, Marc-Roger

(56) Documents cités:
- EP-A- 0 254 957
- DE-A- 2 038 221
- DE-B- 1 144 125
- FR-A- 1 247 131
- FR-A- 2 444 871
- GB-A- 2 025 580
- GB-A- 2 078 910

## Description

La présente invention s'applique à une valve d'échappement et d'alimentation de fluide de et vers un organe d'utilisation, notamment à une valve de nivellement pour au moins un coussin pneumatique de suspension, comprenant dans un corps: un levier oscillant portant une deuxième plaquette de distribution dont une surface en saillie et à haute planéité est en appui étanche sur la surface conjuguée en saillie et à haute planéité d'une première plaquette de distribution montée dans le corps et à travers laquelle s'établit, via des passages débouchant sur la surface à haute planéité de la première plaquette, en fonction de la position du bras oscillant de part et d'autre d'une position neutre isolant l'organe d'utilisation, la liaison de cet organe d'utilisation respectivement avec l'alimentation ou avec l'échappement, les débouchés des passages d'alimentation et d'échappement sur la surface en saillie et en appui étanche étant reliés chacun à une rainure. L'invention concerne également une gamme de telles valves de nivellement et un système de suspension pneumatique utilisant une telle valve de nivellement et une telle gamme de valves de nivellement.

Les systèmes de suspension pneumatique sont de plus en plus utilisés pour les véhicules ferroviaires de transport de passagers et aussi pour les véhicules industriels car, pour ces deux types de véhicules, on dispose déjà d'une source d'air comprimé alimentant des circuits de freinage. Afin de ne pas altérer la sécurité du freinage, des valves de protection appelées valves de barrage interdisent l'alimentation en air comprimé de la suspension pneumatique aussi longtemps que les réservoirs de freinage n'ont pas atteint une pression minimale suffisante pour le freinage. Un problème important et mal résolu réside par contre dans le cout et la fiabilité de ces valves de nivellement qui sont soumises, à la manière des amortisseurs hydrauliques, à des frottements de distribution et à des écoulements de fluide quasi-continuels pendant la marche du véhicule, sans bénéficier, dans le cas de l'air comprimé, de l'effet de lubrification de l'huile des amortisseurs hydrauliques.

Afin d'améliorer la fiabilité des valves de nivellement, on a déjà proposé dans FR-A-1247131 une valve à disque rotatif de maintien d'assiette pour suspension à pression de fluide, destinée à contrôler la pression dans un ou des blocs de suspension par mise en liaison avec une source de pression ou un réservoir. La valve comprend un disque pouvant tourner par rapport au boîtier de valve et dont une face formant glace glisse contre une glace solidaire du boîtier, l'une des glaces étant pourvue d'au moins un orifice d'admission et d'au moins un passage tel qu'une rainure et l'autre glace étant pourvue d'orifices de travail (reliés aux blocs de suspension) et d'échappement et d'au moins un passage tel qu'une rainure pour relier l'orifice d'admission à l'orifice de travail lorsque le disque tourne dans un sens donné, tandis que le passage de la première glace relie l'orifice de travail à l'orifice d'échappement lorsque le disque tourne en sens opposé.

Les parties ou clapets de distribution de ces valves de nivellement devraient pouvoir résister à l'usure par friction mais aussi à la corrosion par les projections d'eau condensée contenues dans l'air comprimé, et par les atmosphères agressives qui peuvent entourer les véhicules équipés de suspensions pneumatiques. L'emploi de l'acier inoxydable pour résister à l'usure et à l'oxydation se heurte à des problèmes de coût et d'usinage. De même, les corps de valve et les parties de fixation auxquelles ils s'assemblent doivent présenter une grande résistance à la corrosion dans des ambiances agressives telles que celles des routes et voies de roulement saturées de sels de déneigement mélangés à de l'eau de fusion et aux salissures projetées en ambiance humide et boueuse.

Un autre besoin s'est révélé, en particulier pour les valves de nivellement destinées aux véhicules routiers industriels et applicables, le cas échéant, aux véhicules automobiles de tout type. D'une part, le besoin s'est exprimé de disposer de valves de nivellement à débit très progressif en fonction de la déviation par rapport au point ou à l'angle neutre et qui soit nettement différencié à l'échappement et à l'admission, en principe avec un débit d'échappement supérieur au débit d'admission pour éviter des déchaussements au délestage de la suspension et mieux amortir les oscillations. Par ailleurs, les coussins de suspension des véhicules industriels présentant des capacités très différentes selon les emplacements équipés, les valves de nivellement devraient pouvoir être aisément personnalisées quant à leur débit à l'admission et à l'échappement et à leur progressivité de mise en débit.

La présente invention a notamment pour but de proposer une valve de nivellement qui satisfasse ces demandes contradictoires mieux que les valves proposées actuellement sur le marché.

A cet effet, selon l'invention, la première plaquette comporte trois passages transversaux reliés sur la face de cette plaquette opposée à la surface à haute planéité, respectivement pour l'un dénommé passage d'alimentation, à une source de fluide sous pression, et pour les deux autres dénommés respectivement passage d'admission et passage d'échappement, à l'organe d'utilisation et lesdits deux autres passages à leur débouché sur ladite surface à haute planéité sont reliés chacun latéralement à la rainure constituée par une rainure longitudinale ouverte sur ladite surface, de plus faible largeur que le diamètre du passage auquel elle est reliée, et qui est orientée de façon sensiblement parallèle au trajet de déplacement de la deuxième plaquette au cours du pivotement du levier oscillant, la première rainure du passage d'alimentation s'étendant dans la direction opposée à la deuxième rainure du passage d'échappement et étant susceptible de venir se placer en face d'une rainure en creux ménagée sur la surface à haute planéité de la deuxième plaquette et reliée en permanence au passage d'alimentation au débouché de ce dernier sur la surface à haute planéité de la première plaquette, tandis que la deuxième rainure est susceptible de venir se placer, en alternance avec la première rainure et après passage d'une arête de délimitation latérale de la surface à haute planéité de la première plaquette, en face d'un espace relié à l'échappement entre la surface à haute planéité de la première plaquette et une surface en retrait de ladite surface à haute planéité de la deuxième plaquette, de manière que, selon le sens de déplacement du levier oscillant à partir de ladite position neutre, le passage d'échappement ou le passage d'alimentation de la deuxième plaquette soit relié respectivement à l'échappement ou à l'alimentation d'abord par l'extrémité distale de la rainure correspondante puis, pour une déviation croissante du levier oscillant par rapport à sa position neutre, par une portion croissante du débouché de la rainure jusqu'à une liaison directe par son débouché sur la face à haute planéité de la première plaquette.

Selon un mode de réalisation de l'invention, la deuxième plaquette est montée dans le levier oscillant en formant piston sur un joint annulaire d'étanchéité par sa face opposée à la surface à haute planéité et de façon sensiblement centrée, et elle comporte un passage transversal d'amenée débouchant d'un côté au fond de la rainure en creux fermée, ménagée sur la surface à haute planéité et, de l'autre côté, à l'intérieur dudit joint annulaire, de manière que la pression de fluide d'alimentation repousse la deuxième plaquette par sa section "de piston" à l'intérieur du joint annulaire, au contact de la première plaquette. Un ressort hélicoïdal d'application permanente est de préférence interposé entre la face "de piston" de la deuxième plaquette et une face d'appui ménagée sur le levier oscillant à l'intérieur d'une chambre de piston dudit levier.

Selon encore un autre mode de réalisation de la valve de nivellement, la rainure en creux fermée présente la forme générale d'un "L" dont l'une des branches est placée en face du débouché du passage d'alimentation sur la face à haute planéité de la deuxième plaquette et dont l'autre branche est reliée en permanence au passage transversal d'amenée et est susceptible de venir se placer en face de la rainure et du passage d'admission sur la surface à haute planéité de la première plaquette, lorsque le levier oscillant est en position d'alimentation. La face de la première plaquette qui est opposée à ladite surface à haute planéité est sensiblement plane et en appui sur un joint d'étanchéité plat en élastomère comportant deux rainures intérieures fermées sur elles-mêmes: une première rainure reliée, du côté du corps de valve, à un passage d'alimentation en fluide sous pression et, du côté de la première plaquette, au passage d'alimentation de cette première plaquette et une deuxième rainure reliée, du côté du corps de valve, à un passage vers l'organe d'utilisation et, du côté de la première plaquette, aux passages d'admission et d'échappement de cette dernière.

Selon un autre mode de réalisation de la valve de nivellement selon l'invention, le raccord de sortie du corps de valve vers l'organe d'utilisation comporte un clapet anti-retour à lèvres élastomères s'ouvrant vers l'organe d'utilisation et un clapet anti-retour taré par un ressort hélicoïdal de pression résiduelle et s'ouvrant vers le retour à l'échappement via le passage d'échappement ménagé à travers la première plaquette.

Selon un autre mode de réalisation de la valve de nivellement selon l'invention, au moins l'une des rainures longitudinales du passage d'alimentation ou du passage d'échappement comporte, sur une largeur sensiblement constante, une partie distale (par rapport audit passage) de profondeur sensiblement constante et une partie proximale de profondeur croissante jusqu'au raccordement avec ledit passage. Au moins l'une des rainures longitudinales du passage d'alimentation ou du passage d'échappement peut présenter, en direction dudit passage, une profondeur croissante et, le cas échéant, une largeur croissante, au moins à partir d'une certaine distance dudit passage. Au moins l'une des rainures longitudinales du passage d'alimentation ou du passage d'échappement peut présenter une profondeur nulle ou très faible à son extrémité distale (par rapport audit passage).

La valve de nivellement selon l'invention destinée à être associée à au moins un coussin de suspension est caractérisée en ce que le passage d'échappement ménagé à travers la première plaquette présente une section transversale nettement plus importante que celle du passage d'admission de cette première plaquette, de manière à obtenir un débit maximal d'échappement courant nettement plus élevé que le débit d'alimentation.

Selon un autre mode de réalisation de la valve de nivellement selon l'invention, la première et la deuxième plaquettes sont réalisées en un matériau céramique formé ou moulé et dont les surfaces à haute planéité sont rectifiées et/ou rodées au poli-miroir en rectification et/ou rodage plan sensiblement parallèle à la face d'appui plane opposée. Au moins l'une des surfaces à haute planéité de la première ou de la deuxième plaquette peut comporter une rainure en creux qui est orientée de façon sensiblement parallèle au trajet de déplacement de la deuxième plaquette au cours du pivotement du levier oscillant, qui est disposée dans une zone où elle ne rencontre pas, au cours dudit pivotement, d'orifice débouchant sur l'autre surface à haute planéité et qui débouche vers l'extérieur, de manière à constituer une rainure de collecte des fuites susceptible de se produire au contact entre lesdits surfaces à haute planéité.

Selon encore un autre mode de réalisation de la valve de nivellement selon l'invention, le corps de valve, le levier oscillant et un couvercle de fermeture assemblés sur le corps sont réalisés en matière plastique, résistante aux ultraviolets et à l'effet de l'eau et des sels de déneigement, par exemple en polyéthylène, qui est moulée de façon très fortement nervurée en conservant des épaisseurs de matière sensiblement constantes, pour supprimer les effets de retrait et un soufflet élastique étanche est interposé entre un rebord du corps de valve assemblé et le levier d'actionnement et se prolonge par des languettes de fermeture souples appliquées élastiquement sur des passages d'échappement.

La gamme de valves de nivellement pour suspensions pneumatiques selon l'invention qui consistent en valves telles que décrites précédemment, est caractérisée en ce que chaque valve est constitué d'éléments de valve standard, à l'exception de la première plaquette qui comporte des passages transversaux et des rainures longitudinales spécifiques à l'usage auquel est destiné la valve. Dans la gamme de valves selon l'invention, la première plaquette de chaque valve peut comporter un passage d'alimentation, une rainure et un passage d'admission standard et un passage et une rainure d'échappement usinés par perçage ou alésage et, respectivement, par fraisage ou meulage, à un diamètre et, respectivement, à une profondeur et, le cas échéant, à une largeur spécifiques du type de suspension pneumatique pour laquelle elle est utilisée. Au moins l'une des rainures longitudinales du passage d'alimentation ou du passage d'échappement peut présenter une forme usinée à la fraise ou à la meule disque, et traversant le débouché du passage pour venir s'engager sur une faible longueur du côté opposé à la rainure longitudinale et constituer une rainure secondaire.

Le système de suspension pneumatique comprenant divers coussins de suspension pneumatique dont la pression est contrôlée par une valve de nivellement comporte, pour chaque coussin de suspension, une valve de nivellement selon l'invention et dans laquelle la première plaquette de distribution est spécifique du type de coussin de suspension contrôlé en ce qu'elle présente des passages d'alimentation et d'échappement et des rainures associées, moulés ou usinés à des dimensions en correspondance avec le type de coussin de suspension contrôlé par la valve.

D'autres buts, avantages et caractéristiques apparaîtront à la lecture de la description de divers modes de réalisation de l'invention, faite à titre non limitatif et en regard du dessin annexé, dans lequel:
- - la figure 1: représente en perspective éclatée les divers constituants d'une valve de nivellement selon l'invention;
- - la figure 2: représente schématiquement, sur une vue en plan du corps de la valve de nivellement de la figure 1, les plaquettes de distribution et les organes d'amenée, de distribution et d'évacuation de fluide;
- - la figure 3: représente une coupe longitudinale de la valve de nivellement de la figure 1, selon le plan II-II de la figure 2;
- - la figure 4: est une vue fragmentaire en coupe longitudinale et à plus grande échelle, du raccord, de la valve de nivellement de la figure 1, vers un organe à alimenter;
- - la figure 5: représente schématiquement la vue en plan de la figure 2, simplifiée et à plus grande échelle, avec la face de contact de la plaquette de distribution mobile, respectivement retournée (dans le coin supérieur droit de la figure) et vue par transparence (dans le coin inférieur gauche de la figure);
- - les figures 6a, 6b, 6c: représentent les deux plaquettes de distribution superposées, la plaquette mobile (deuxième plaquette) étant disposée respectivement:
- en position de pleine alimentation du ou des coussin(s) de suspension contrôlé(s) par la valve de nivellement (figure 6a);
- en position neutre ou d'isolement du ou des coussin(s) de suspension (figure 6b);
- en position de plein échappement du ou des coussin(s) de suspension (figure 6c);
- - la figure 7: représente schématiquement en plan un véhicule industriel tracteur de semi-remorque sur lequel quatre coussins de suspension de cabine sont contrôlés par trois valves de nivellement selon l'invention;
- - la figure 8: est un graphique représentant les débits de la valve de nivellement de la figure 1, respectivement à l'échappement E et à l'admission A, selon un premier mode de réalisation de la plaquette de distribution fixe dont les passages d'admission et d'échappement sont représentés à grande échelle en coupe;
- - la figure 9: est un autre graphique représentant les débits à l'échappement et à l'admission de la valve de nivellement de la figure 1, selon un autre mode de réalisation des rainures de la plaquette de distribution fixe dont les passages d'admission et d'échappement sont également représentés à grande échelle en coupe.

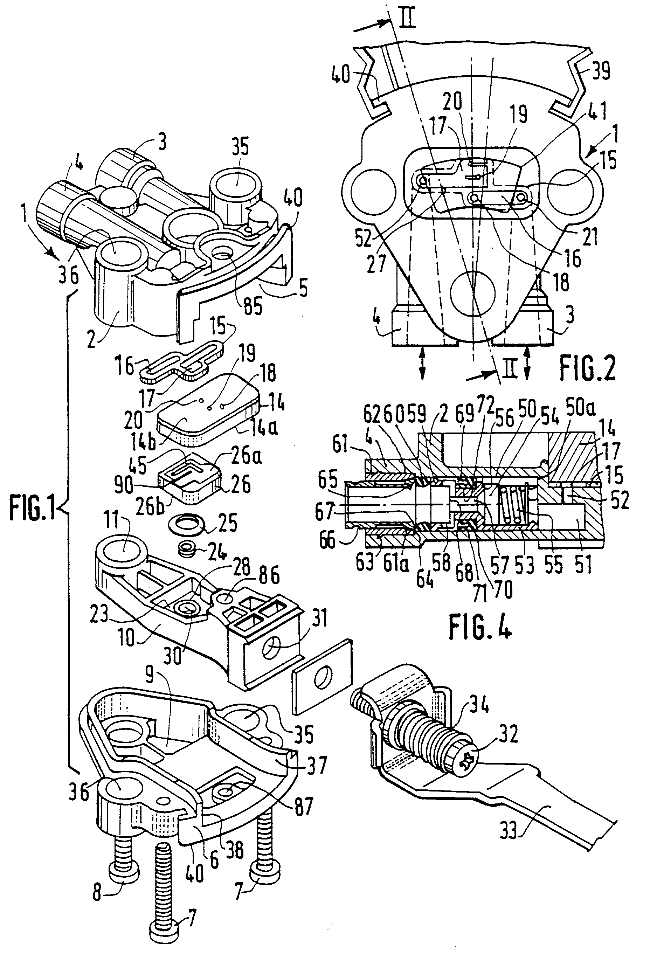

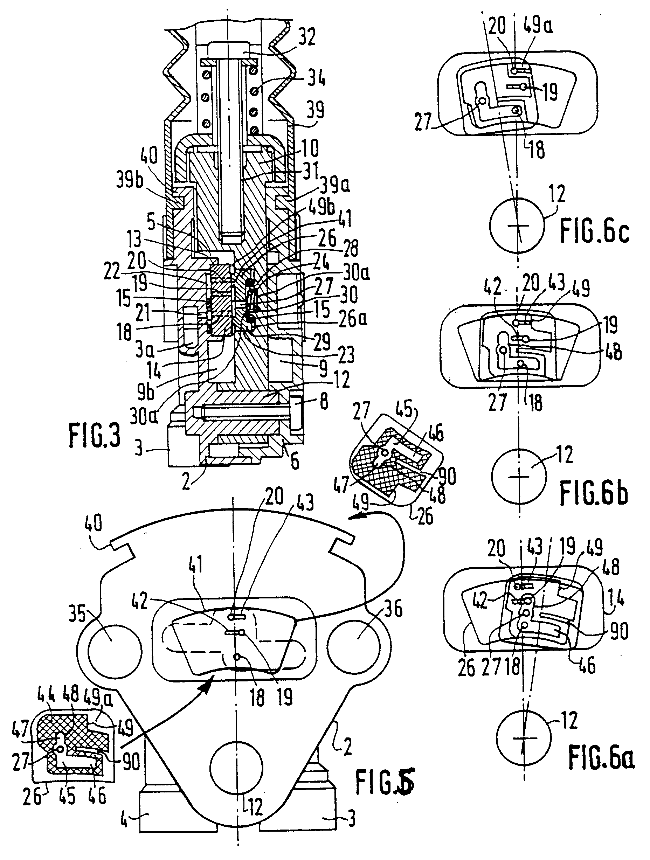

Si l'on se reporte à la vue éclatée de la figure 1, on voit que la valve de nivellement 1 qui constitue l'un des modes de réalisation préféré de la valve d'échappement et d'alimentation de fluide selon l'invention est montée dans un corps 2, par exemple moulé en matière plastique, et qui comporte des raccords 3 et 4, respectivement, vers une alimentation en air comprimé et vers un organe d'utilisation constitué par au moins un coussin de suspension pneumatique. Le corps 2 porte des organes internes de distribution qui sont enfermés dans une cavité 5 du corps 2, fermée par un couvercle 6 également moulé en matière plastique et fixé sur le corps 2 par des vis 7 et par une vis 8 représentée à la figure 3. Une cavité intérieure 9 du couvercle 6 et la cavité 5 du corps 2 forment, après assemblage de la valve 1, une cavité intérieure dans laquelle est logé un bras de distribution 10 qui est monté oscillant d'un angle limité (de l'ordre de 30°) à l'aide d'un alésage 11 qui, en position de montage, est traversé par un téton en saillie 12 du corps 2. Comme on le voit sur la coupe longitudinale de la figure 3, l'extrémité extérieure du téton 12 est appliquée dans un logement du couvercle 6 et est maintenue en position dans ce logement par la vis 8.

Le corps de valve 2 comporte un logement 13 (visible à la figure 3) pour une première plaquette de céramique 14 et sur le fond 22 duquel vient se placer une garniture d'étanchéité plate en élastomère 15 munie de deux rainures 16, 17 à bord fermé mais débouchant latéralement sur la partie plate et qui correspondent, respectivement, à la liaison vers une source d'air comprimé et à la liaison vers un organe à alimenter. La première plaquette 14 comporte trois passages transversaux ou perçages 18, 19, 20 destinés à être reliés, dans la valve respectivement, à l'alimentation en air comprimé, à la liaison du coussin de suspension avec l'alimentation en air comprimé et à la liaison du coussin de suspension avec l'échappement et dénommés en conséquence respectivement: passage d'alimentation 18, passage d'admission 19 et passage d'échappement 20. La liaison du passage 18 avec l'alimentation en air comprimé est réalisée, comme représenté à la figure 3, par un passage de faible section 21 qui relie dans le corps 2, le fond 22 du logement 13 avec l'espace intérieur 3a du raccord d'alimentation 3, protégé le cas échéant par un filtre (non représenté) contre l'introduction de salissures provenant du circuit d'alimentation.

En se reportant à la figure 1, on voit que le bras 10 formant levier oscillant présente un logement de plaquette 23 dans lequel viennent se loger successivement un ressort hélicoïdal de poussée 24, un joint annulaire d'étanchéité 25 et une deuxième plaquette de distribution en céramique 26 qui est mobile avec le bras 10 par rapport à la première plaquette 14. La deuxième plaquette 26 présente une face avant 26a au contact de la face avant 14a de la première plaquette 14 et une face arrière 26b sur laquelle débouche un passage ou perçage transversal 27 dont la fonction va être explicitée. Le fond du logement de plaquette 23 du bras de distribution 10 présente en effet une saillie annulaire 28 et la face arrière 26a de la deuxième plaquette 26 une partie en creux délimitée par une paroi annulaire de rebord 29. Le joint 25 d'étanchéité de piston de plaquette, annulaire ou torique, est interposé entre la paroi extérieure de la saillie annulaire 28 et la paroi annulaire de rebord 29 comme on le voit à la figure 3, de manière que la chambre 30 à fond 30a dans laquelle est logé le ressort de poussée 24 constitue une chambre de piston alimentée en air comprimé par le passage 27 pour repousser la deuxième plaquette 26 au contact de la première plaquette 14.

Le bras de distribution 10 présente un taraudage 31 dans lequel vient se visser l'extrémité filetée d'une vis 32 de montage d'un levier de commande de valve 33 par l'intermédiaire d'un ressort hélicoïdal d'application 34. Lorsque la valve est en service, elle est généralement fixée à travers des orifices de fixation 35, 36 de son corps 2 et de son couvercle 6, sur la caisse d'un véhicule, et l'extrémité du levier 33 est reliée par une timonerie à une partie solidaire d'une ou plusieurs roue(s) de roulement du véhicule, par exemple un essieu avant ou un carter de pont arrière. Le déplacement relatif de la caisse du véhicule par rapport aux roues de roulement provoque ainsi une rotation relative du levier 33 et du bras de distribution 10 conduisant à une alimentation ou à une purge du ou des coussin(s) de suspension contrôlé(s) par la valve de nivellement, tendant à faire annuler le déplacement relatif de la caisse du véhicule.

La liaison entre le levier 33 et le bras 10 par l'intermédiaire du ressort hélicoïdal d'application 34 permet, de façon bien connue, au levier 33 de se "casser" par rapport au bras d'alimentation 10 lorsque ce dernier est en butée sur une face latérale 37 ou 38 du couvercle 6 ou du corps 2 et que le levier 33 doit continuer sa course, car le déplacement relatif entre la caisse du véhicule et sa ou ses roue(s) de roulement est important. Une gaine ou un soufflet en élastomère 39 est interposée entre le levier 33 et un rebord périphérique 40 du corps 2 et du couvercle 6 afin d'éviter la pénétration des salissures dans l'ouverture frontale (cavité 5) de débattement du levier ou bras de distribution 10. Le soufflet élastique 39 se prolonge au-delà d'un rebord intérieur 39b accroché dans une rainure derrière le rebord 40, par des languettes de fermeture souples 39a appliquées élastiquement sur des ouvertures d'échappement pour protéger ces dernières contre l'introduction de salissures.

On va maintenant examiner la forme de la face avant 14a de la première plaquette qui apparaît sur la figure 2 et, à plus grande échelle, sur la figure 5. La face 14a comporte une partie en saillie extérieure 41 dont la surface parfaitement lisse, rectifiée et rodée au poli-miroir, forme glace de distribution. Sur cette glace 41, débouche, à la partie inférieure des figues 2 et 5, le passage 18 d'amenée d'air comprimé. A la partie médiane de la glace 41, débouche le passage 19 d'admission d'air comprimé vers les coussins de suspension, raccordé à une fente de distribution 42. A la partie supérieure (selon les figures) de la glace 41, débouche le passage 20 de mise à l'échappement raccordé à une fente de distribution 43. On a représenté en haut et à gauche de la figure 8, de façon fragmentaire en coupe et à plus grande échelle ainsi qu'en vue de dessus, le passage 20 ménagé dans la première plaquette 14 ainsi que la fente 43 qui présente ici une partie à profondeur constante jusqu'à un fond 43a et une partie à profondeur croissante dont le fond 43b se raccorde directement à la paroi cylindrique du passage 20. Le passage 19 et la fente 42 sont représentés en coupe et en vue de dessus en haut et à droite de la figure 8 et présentent, selon un premier mode de réalisation, sensiblement la même forme que le passage 20 et la fente 43, la différence principale résidant dans l'orientation de la fente (vers la gauche du passage selon les figures) et aussi dans la largeur de la fente comme on le verra plus loin.

La forme de la face avant 26a de la deuxième plaquette 26 est représentée en perspective sur la figure 2 et en plan et à plus grande échelle sur la figure 5. En haut de la figure 5, la face 26a est représentée après retournement de la plaquette 26 (comme l'indique la flèche en traits épais), tandis que sur la face 26b représentée à gauche du corps 2 et en bas de la figure 5, apparaît en traits fins la forme de la partie de contact ou glace de la face 26a vue par transparence.

Les figures 6a à 6c qui servent à expliquer les diverses positions relatives prises par la première et la deuxième plaquettes au cours du fonctionnement de la valve de nivellement représentent la face 26a vue par transparence. La forme de cette face active 26a sera expliquée en référence à cette représentation qui figure également dans le coin gauche en bas de la figure 6.

La face 26a présente une surface en saillie plane rectifiée au poli-miroir ou glace 44 qui est représentée sur la figure 5 en hachures croisées. Dans la zone de gauche et inférieure (selon la figure 5 en bas à gauche) de la glace 44, est ménagée en creux une rainure 45 en forme de L, fermée sur ses bords et qui présente une branche inférieure 46 qui se trouve placée, en position de service, continuellement en face du débouché du passage 18 d'alimentation en air comprimé sur la face avant 14a de la première plaquette 14. La branche perpendiculaire 47 du L présente un fond sur lequel débouche le passage 27 de la deuxième plaquette 26 servant à mettre sous pression d'air comprimé la chambre 30 formant chambre de piston pour la deuxième plaquette 26. La branche 47 de la rainure 45 présente un élargissement autour du débouché du passage 27 et un bord droit 48 qui sert d'arête de distribution d'air comprimé, en coopération avec le débouché du passage 19 et de la rainure 42 sur la face avant 14a de la première plaquette, comme on l'expliquera par la suite. Une arête latérale droite 49 de la glace 44 sert d'arête de contrôle de l'échappement de l'air comprimé, en coopération avec le débouché du passage 20 sur la face 14a de la première plaquette, débouché qui se trouve alors placé au-delà de l'arête 49 en face d'une surface en retrait 49a formant, avec la surface de glace 41 de la première plaquette 14, un espace 49b mis à l'échappement (voir la figure 3).

On remarque par ailleurs sur la glace 44 une rainure en creux 90 qui part latéralement de la glace, du côté de l'arête 49, et qui s'étend selon un arc de cercle sensiblement parallèle à celui de la branche inférieure 46, c'est-à-dire selon l'arc local de déplacement de la deuxième plaquette 26 au cours du pivotement du bras de distribution 10. Dans la zone où elle est disposée, la rainure en creux 90 se déplace sur la glace 41 de la première plaquette entre le passage d'alimentation 18 et le passage d'admission 19, sans jamais rencontrer d'orifice débouchant sur la glace 41. La rainure 90 est ici arrêtée sensiblement sur l'axe de symétrie de la deuxième plaquette 26 pour former une rainure borgne qui débouche vers l'extérieur du côté de la rainure 49 et qui est susceptible de collecter les fuites d'air comprimé se produisant sous le contact entre les deux glaces 41 et 44 au cours du pivotement de la deuxième plaquette 26, afin d'éviter que ces fuites n'amorcent un décollement des deux glaces dans leurs zones de contact où se manifeste une adhérence mutuelle avec un effet de collage des deux surfaces polies des glaces. La rainure 90 peut, bien entendu, être disposée en un autre emplacement des glaces de la deuxième plaquette 26 ou bien de la première plaquette 14 et même traverser ces glaces de part en part, à condition de ne pas rencontrer d'orifice débouchant sur la surface de glace conjuguée au cours du pivotement de la deuxième plaquette 26.

Le raccord 4 vers un ou plusieurs organes à alimenter tels que des coussins de suspension est représenté en coupe longitudinale à la figure 4. Un alésage 50 ménagé dans le raccord 4 présente une chambre de fond 51 qui est raccordée à la rainure 17 par un passage de faible dimension 52 ménagé à travers la paroi du corps de valve 2. On rappellera que le corps de valve 2, de même que le couvercle 6 et le bras de distribution 10, sont réalisés de préférence par moulage d'une matière plastique résistante, telle que du polyéthylène et présentent, pour des raisons de moulage, des épaisseurs de matière sensiblement constantes dans toutes leurs parties afin d'éviter des effets de déformation par retrait au cours du refroidissement et après démoulage. Le passage 52 débouche sur le fond 22 du logement 13 de la première plaquette 14, à l'intérieur de la rainure à bord fermé 17, au voisinage d'une extrémité de cette rainure 17 dont l'autre extrémité élargie communique avec les passages 20 et 19 de et vers l'organe d'utilisation.

L'alésage 50 contient un support de clapet 53 qui vient en butée sur le fond plan 50a de l'alésage 50, traversé par la chambre de fond 51. Le support de clapet 53 porte un clapet anti-retour 54 repoussé par un ressort hélicoïdal 55 sur un siège annulaire 56 traversé dans le support 53 par un passage central 57 qui se prolonge par des branches 58 portant une couronne 59 en appui sur un joint annulaire d'étanchéité 60. La partie de sortie du raccord 4 est munie d'un manchon métallique 61, réalisé par exemple en laiton, enfoncé à force dans un alésage 62 de plus grand diamètre que l'alésage 50 et retenu par des griffes 63. Le manchon métallique 61 représenté sur la figure 4 se termine, sur un épaulement 64 ménagé au fond de l'alésage 62, par une partie conique évasée 61a qui est susceptible de retenir des griffes 65 d'un manchon de montage 66. Les griffes 65 sont élastiques principalement dans la direction radiale et présentent vers l'intérieur des pointes 67 d'accrochage d'un tube souple.

Le raccordement au raccord 4 du tube souple relié à un organe à alimenter s'effectue en poussant latéralement le manchon 66 en direction du corps de valve 2. La surface conique 61a du manchon métallique 61 cesse alors d'être en contact avec les griffes 65 qui reviennent élastiquement vers l'extérieur. Il est alors possible d'introduire le tube souple à l'intérieur du manchon 66 jusqu'à sa venue en butée sur un épaulement de fond 68 ménagé sur les branches 58 et en contact annulaire avec le joint torique 60 qui assure son étanchéité par rapport à la paroi intérieure de l'alésage 50. Le relâchement de la poussée axiale sur le manchon 66 permet le retour de ce dernier vers la gauche de la figure 4, dans la position représentée où la surface conique 61a repousse les pointes 67 vers l'intérieur, sur la surface extérieure du tube souple, pour accrocher axialement ce dernier.

Le support de clapet 53 porte, dans une rainure annulaire 69, un joint annulaire d'étanchéité 70 à double lèvres 71 et 72 dont la lèvre extérieure 71 est très souple. Cette souplesse de la lèvre extérieure 71 fait que, lorsque le coussin de suspension est alimenté en air comprimé depuis le passage 52 et la chambre 51, cette lèvre 71 s'incline aisément vers l'intérieur et laisse passer le débit de remplissage du coussin presque sans perte de charge. Lorsque le coussin de suspension doit être purgé, la pression dans la chambre 51 devient inférieur à celle régnant dans le coussin de suspension dont la surpression plaque la lèvre 71 sur la paroi intérieure de l'alésage 50. L'échappement du coussin ne peut alors plus être réalisé que par la levée du clapet 54 qui se décolle de son siège 56 à l'encontre du ressort taré 55. Le ressort 55 est en général taré pour qu'il subsiste dans le coussin de suspension une pression significative, par exemple comprise entre 0,5 et 1,2 bar, de manière que les parois en élastomère du coussin de suspension restent appliquées sans pli sur leur piston de siège.

On va maintenant expliquer le fonctionnement de la valve de nivellement en référence aux figures schématiques 6a à 6c.

Dans la position représentée sur la figure 6a, la deuxième plaquette 26 a effectué sa course maximale vers la droite de la figure, ce qui signifie que la face latérale du bras de distribution 10 est en butée sur la face latérale 37 du couvercle 6, le levier de commande 33 étant, le cas échéant "cassé" par suite d'un grand écart entre la caisse du véhicule et la ou les roue(s) correspondant au coussin de suspension. Dans cette position de pleine admission, le passage transversal 19 est relié à la source d'air comprimé amenée au raccord 3, par le passage 21, la rainure 16, le passage 18 et les branches 46 et 47 de la rainure 45. Par la pleine section du passage 19 et la partie la plus profonde de la fente 42, l'air comprimé d'alimentation s'écoule dans la rainure 17 jusqu'au passage 52, à l'extrémité de gauche (selon la figure 2) de la rainure 17, ce passage 52 conduisant au raccord 4 vers le ou les organe(s) d'utilisation, comme représenté à la figure 4. Lorsque la première plaquette 14 et la deuxième plaquette 26 sont disposées dans la position relative de la figure 6a, le coussin de suspension qui est comprimé de façon exagérée, est réalimenté en air comprimé pour faire cesser cet écrasement exagéré et rétablir l'assiette normale du véhicule.

Au fur et à mesure du remplissage du coussin de suspension en air comprimé, la pression qui augmente à l'intérieur du coussin repousse la caisse du véhicule vers le haut par rapport à la ou les roue(s) contrôlée(s) et le levier 33 se déplace également en entraînant le bras de distribution 10, tout d'abord dans une position intermédiaire entre celle des figures 6a et 6b où le bord droit 48 de la branche 47 de la rainure 45 de la deuxième plaquette 26 a dépassé la sortie du passage 19 pour venir se placer en face du fond le moins profond 42b de la rainure 42. Le passage 19 ne peut alors plus être alimenté qu'à débit réduit à travers le début de la fente 42.

Le remplissage du coussin de suspension continuant, le déplacement du levier 33 amène alors le bras de distribution 10 dans la position où les plaquettes 14 et 26 occupent les positions relatives de la figure 6b. Dans les positions représentées à la figure 6b, les orifices de débouché des passages 19 et 20 sur la glace 41 ainsi que les rainures correspondantes 42 et 43 sont entièrement situés en face de la glace 44 de la plaquette 26 et donc obturés, ce qui isole le ou les coussin(s) de suspension contrôlé(s) par la valve 1.

En ce qui concerne l'isolement de l'organe à alimenter tel qu'un coussin de suspension, on doit rappeler que la deuxième plaquette 26 est repoussée en direction de la première plaquette 14 par l'effet de réaction du ressort 24 en appui sur le fond 30a de la chambre 30 et par l'action de la pression d'air comprimé d'alimentation s'exerçant sur le piston de plaquette délimité par le joint annulaire 15. La section active du piston de plaquette (de la deuxième plaquette 26) est définie par le diamètre extérieur de la saillie annulaire 28 et doit être nettement supérieure à la section de la rainure en L 45 qui tend à éloigner les deux plaquettes l'une de l'autre lorsque cette rainure 45 est sous la pression d'alimentation. Le "collage" mutuel des deux glaces 41 et 44 au poli miroir et parfaitement planes persiste ainsi dans le temps pour assurer une étanchéité permanente de distribution au contact des glaces. Pour limiter la friction et l'usure entre les glaces 41 et 44, la surface de celles-ci est lubrifiée, en général par de la graisse qui s'infiltre dans les pores de la céramique. Ce graissage tend souvent, non pas à réduire l'effet de collage entre les surfaces de glaces 41 et 44, mais plutôt à l'augmenter. Le ressort 24 très compact et dont la force (par exemple de 1 daN) et la course de réaction sont faibles, garantit que les glaces 41 et 44 ne se décolleront pas après leur collage initial qui est confirmé en service par la pression d'application sur le piston de plaquette à l'intérieur du joint 25, mais qui pourrait être détruit par les vibrations auxquelles est soumis le corps de valve monté sur un véhicule qui roule en l'absence de pression d'alimentation au raccord 3.

Si le levier 33 fait déplacer l'arête 48 de la branche de rainure 47 en direction de l'extrémité 42c de la rainure 42 (voir le détail de la rainure 42 à la figure 8), le coussin de suspension va être réalimenté à faible débit. A l'inverse, si le levier 33 fait déplacer la rainure 43 en direction de l'arête latérale 49, la rainure 43 commence à être reliée à l'échappement et l'air comprimé du coussin de suspension commence à s'échapper dans les cavités intérieures 9, 9b et 5 reliées à l'atmosphère.

Dans les positions relatives représentées à la figure 6c, la totalité du débouché de la rainure 43 et du passage 20 sur la glace 41 est venue se placer devant le dégagement en creux 49a qui suit, sur la plaquette 26, l'arête 49 de la glace 44. L'air comprimé du coussin de suspension est alors purgé au plus grande débit admissible par la valve pour obtenir une descente de la caisse du véhicule par rapport aux roues.

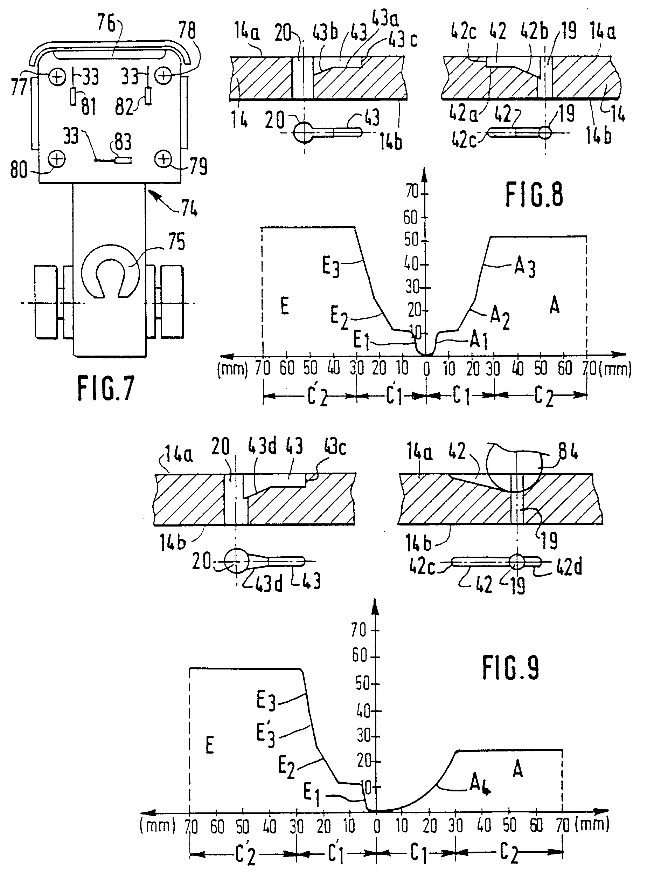

On a représenté schématiquement sur la figure 7 un véhicule tracteur industriel 74, destiné à tracter une semi-remorque dont le col de cycle avant vient s'appliquer sur une sellette 75. La cabine 76 du véhicule tracteur est suspendue sur quatre coussins pneumatiques 77, 78, 79 et 80 placés chacun au voisinage d'un des coins de la cabine. La pression d'air comprimé à l'intérieur des coussins de suspension 77 à 80 est contrôlée par des valves de nivellement du type qui vient d'être décrit. Les coussins de suspension 77 et 78 sont respectivement contrôlés par une valve de nivellement 81 et 82, reliée mécaniquement à l'essieu avant du véhicule par une timonerie réglable articulée au levier de valve 33. Les caractéristiques de débit de ces valves de nivellement 81 et 82 sont représentées sur le diagramme de la figure 8. Les débits d'air comprimé sont donnés en ordonnées en valeurs pondérales (par exemple en grammes par minute) pour une surpression d'alimentation constante (par exemple 10 bars) et un échappement depuis la pression maximale du coussin de suspension dans une atmosphère standard. On a représenté en abscisses le déplacement de l'extrémité du levier 33 de part et d'autre d'un point d'équilibre moyen O où les plaquettes 14 et 26 occupent les positions relatives représentées à la figure 6b.

Dans le dispositif réalisé selon l'invention, le passage d'échappement 20 présente un diamètre d'alésage de 1 mm par exemple, plus grand que le passage d'admission 19 dont le diamètre d'alésage est par exemple de 0,8 mm, de telle façon que le débit massique d'échappement (zone E) de la valve de nivellement soit légèrement supérieur au débit massique d'admission (zone A). La rainure d'échappement 43 présente également une largeur (par exemple 0,3 mm) supérieure à celle de la rainure d'admission 42 (par exemple 0,2 mm). On voit sur les courbes de débit massique en fonction du déplacement par rapport à la position neutre du levier 33 que pour des faibles courses (de l'ordre de 3 à 5 mm) d'écart du levier 33, les débits d'admission ou d'échappement en A1 ou E1 montent brusquement jusqu'à des valeurs faibles (de l'ordre de 10 g/mn), ce qui correspond, respectivement, à la position de l'arête de distribution 48 en face de la zone 42a du fond de la rainure 42 et à la position de l'arête d'échappement 49 en face de la zone 43a du fond de la rainure 43. Les débits d'admission ou d'échappement augmentent rapidement lorsque l'arête de distribution 48 ou respectivement l'arête d'échappement 49 vient se placer en face de la partie à profondeur croissante correspondant au fond 42b ou 43b de la rainure 42 ou 43 (parties A2 et E2 des courbes). Dès que l'arête de distribution 48 arrive en face du débouché du passage 19 ou que l'arête d'échappement 49 vient se placer en face du débouché du passage 20, les débits d'admission et d'échappement croissent très rapidement jusqu'à la valeur maximale (dans la partie A3 ou E3 des courbes de débit). La course de l'extrémité du levier de valve 33 (course d'admission C1 et d'échappement C'1) est alors par exemple d'environ 30 mm à partir du point moyen O et les faces latérales du levier de distribution 10 viennent en butée sur une face latérale 37 ou 38 du couvercle 6. Toute course supplémentaire du levier 33 (C2 ou C'2), correspondant par exemple au passage de la roue contrôlée sur une bosse ou un trou du chemin de roulement, provoque la "cassure" du levier qui se déplace par rapport au levier de distribution 10 en écrasant le ressort 34, la valve restant dans sa position de débit maximal tendant à corriger l'anomalie de suspension.

En revenant à la figure 7, on voit que les coussins de suspension arrière 79 et 80 sont alimentés par une seule valve de nivellement 83 placée en position centrale et qui devrait en conséquence présenter des caractéristiques de débit à l'admission à l'échappement plus importantes que celles des valves 81 et 82. Ces caractéristiques sont obtenues par exemple en agrandissant les diamètres des passages 19 et 20 sans modifier les rainures 42 et 43, ce qui donne des courbes de débit sensiblement identiques pour les parties A1, A2 et E1, E2 mais des parties A3 et E3 qui atteignent des valeurs plus importantes.

Afin d'obtenir avec les valves de nivellement selon l'invention de meilleures qualités d'amortissement des écarts ou débattements de suspension, il s'est avéré avantageux de disposer de débits d'alimentation progressifs en fonction de la course d'écart du levier de valve 33 et de débits d'échappement se développant rapidement après des paliers à débit constant et jusqu'à des valeurs nettement plus importantes que-celles des débits d'admission. En effet, l'amortissement d'une impulsion sur une suspension s'effectue principalement par élimination du rebond et donc par échappement sur une suspension pneumatique, la capacité d'échappement n'étant pas liée obligatoirement à la capacité d'alimentation en air.

Pour obtenir cette "personnalisation" des valves de nivellement, on prévoit des valves de nivellement selon l'invention dont toutes les pièces sont identiques, à l'exception de la première plaquette 14 qui est munie d'un passage 18 standard mais de passages 19 et 20 ménagés à des diamètres spécifiques à l'usage auquel est destiné la valve de nivellement. Avant le montage de la valve de nivellement destinée à un usage spécifique, on a indiqué les diamètres des alésages 19 et 20 et, le cas échéant, la forme et les dimensions des rainures 42 et 43, ces dimensions étant reportées sur une plaque d'identification de la valve.

Si l'on se réfère à la figure 9, on voit qu'il est possible d'utiliser une première plaquette 14 dont le passage 19 est percé au diamètre minimal, puis d'agrandir, par forage ou par meulage, le diamètre de l'alésage 19, et d'aménager à la fraise ou à la meule disque 84 une rainure 42 de profondeur continuellement croissante jusqu'au débouché sur l'alésage 19 qui est traversé diamétralement par la meule 84 débouchant dans l'alésage et dépassant cet alésage en 42d. On obtient ainsi une courbe de débit d'alimentation en air comprimé de forme sensiblement parabolique comme représenté en A4, jusqu'au débit d'alimentation maximum d'environ 25 g/mn. Le passage 19 et la rainure 42 peuvent aussi être réalisés directement par formage avant frittage de la plaquette 14 en céramique.

Afin d'obtenir les caractéristiques de débit à l'échappement prévues pour le passage 20 et la rainure 43, on peut aménager d'abord avec une fraise en bout la partie à profondeur constante de la rainure 43 et une partie 43d à profondeur croissante et, si possible de largeur croissante, débouchant dans le passage 20 à son diamètre d'alésage minimal. Le passage 20 est ensuite usiné par meulage ou perçage à son diamètre définitif, afin d'obtenir la courbe de débit E1, E2, E'3, E3 où, par rapport à la courbe similaire de la figure 8, la partie de la courbe E'3 présente une pente plus importante correspondant à l'arrivée de l'arête d'échappement 49 en face de la zone 43d à profondeur et largeur croissante de la rainure 43. Pour des séries importantes, le passage 20 et la rainure 43 peuvent être obtenus plus économiquement, directement de formage avant le frittage de la plaquette 14.

La valve de nivellement selon l'invention comportant une première plaquette 14, usinée ou formée selon les principes représentés à la figure 9, permet d'obtenir des caractéristiques d'amortissement pneumatique exceptionnelles du fait de la dissymétrie des courbes de débit d'alimentation et d'échappement. Cet effet d'amortissement est encore modifié et amélioré par l'existence du clapet de pression résiduelle 54 qui s'oppose à la purge complète des coussins de suspension. L'existence du clapet 54 et du clapet à lèvres 70 sur le circuit d'alimentation via le raccord 4 a pour conséquence qu'un débit d'échappement ou d'admission ne s'établit qu'après l'obtention d'une nette différence de pression au niveau du débouché des passages correspondants 20 et 19, les faibles oscillations autour du point moyen O ne donnant pas lieu à un débit d'alimentation ou d'échappement sensible, comme le montre la partie quasi-plane du départ des courbes de débit à partir du point O.

Dans le cas où l'on souhaite bloquer la valve de nivellement 11 en position neutre, par exemple en cas de crevaison du coussin de suspension contrôlé, des passages ou perçages correspondants 85, 86, 87 sont prévus respectivement sur le corps de valve 2, sur le levier de distribution 10 et sur le couvercle 6 pour permettre de placer, en position médiane du levier 10, une tige métallique qui traverse au moins le passage 86 et l'un des deux autres passages 85 ou 86 afin d'immobiliser le levier 10 en position neutre par rapport au corps 2 et au couvercle 3.

On notera que les perçages 85 et 87 constituent un débouché vers l'extérieur des chambres intérieures 9, 9b et 5 et donc des passages d'échappement mais qui sont normalement recouverts par les languettes de fermeture souples 39a de la gaine ou soufflet 39, au-delà du rebord intérieur 39b engagé dans une rainure intérieure du corps 2 et du couvercle 3 derrière le rebord 40. Les languettes de fermeture souples 39a sont susceptibles de se soulever au-dessus des perçages 85 et 87 pour laisser passer l'air comprimé d'échappement du coussin pneumatique et de reprendre élastiquement leur position après l'échappement pour protéger la valve contre toutes les entrées de salissures et d'humidité.

La valve de nivellement représentée avec ses aménagements sur les figures 1 à 9 peut être utilisée à d'autres fins que le nivellement d'une suspension pneumatique, notamment pour l'alimentation et l'échappement alternés d'un ou plusieurs organe(s) d'actionnement, tel qu'un vérin pneumatique ou hydraulique, le liquide distribué dans ce dernier cas assurant une certaine lubrification du contact entre les deux plaquettes, sans faire cesser la forte adhérence de collage s'exerçant au contact entre les deux plaquettes.

## Revendications

1. Valve d'échappement et d'alimentation de fluide de et vers un organe d'utilisation, notamment valve de nivellement (1) pour au moins un coussin pneumatique de suspension (77 à 80), comprenant dans un corps(2): un levier oscillant (33) portant une deuxième plaquette de distribution (26) dont une surface en saillie et à haute planéité (26a) est en appui étanche sur la surface conjuguée en saillie et à haute planéité (14a) d'une première plaquette de distribution (14) montée dans le corps (2) et à travers laquelle s'établit, via des passage (18, 19, 20) débouchant sur la surface à haute planéité (14a) de la première plaquette (14), en fonction de la position du bras oscillant (33) de part et d'autre d'une position neutre isolant l'organe d'utilisation, la liaison de cet organe d'utilisation respectivement avec l'alimentation ou avec l'échappement, les débouchés des passages d'alimentation (20) et d'échappement (19) sur la surface en saillie et en appui étanche étant reliés chacun à une rainure (42, 43) caractérisée en ce que la première plaquette (14) comporte trois passages transversaux (18, 19, 20) reliés sur la face (14b) de cette plaquette opposée à la surface à haute planéité (41), respectivement pour l'un dénommé passage d'alimentation (18), à une source de fluide sous pression (3), et pour les deux autres dénommés respectivement passage d'admission (19) et passage d'échappement (20), à l'organe d'utilisation (77 à 80) et en ce que lesdits deux autres passages (19, 20), à leur débouché sur ladite surface à haute planéité, sont reliés chacun latéralement à la rainure (42, 43) constituée par une rainure longitudinale ouverte sur ladite surface, de plus faible largeur que le diamètre du passage auquel elle est reliée, et qui est orientée de façon sensiblement parallèle au trajet de déplacement de la deuxième plaquette (26) au cours du pivotement du levier oscillant (10), la première rainure (42) du passage d'alimentation (19) s'étendant dans la direction opposée à la deuxième rainure (43) du passage d'échappement (20) et étant susceptible de venir se placer en face d'une rainure en creux (45) ménagée sur la surface à haute planéité (44) de la deuxième plaquette (26) et reliée en permanence au passage d'alimentation (18) au débouché de ce dernier sur la surface à haute planéité (41) de la première plaquette (14), tandis que la deuxième rainure (43) est susceptible de venir se placer, en alternance avec la première rainure (42) et après passage d'une arête (49) de délimitation latérale de la surface à haute planéité de la première plaquette, en face d'un espace (49b) mis à l'échappement entre la surface à haute planéité (41) de la première plaquette (14) et une surface en retrait (49a) de ladite surface à haute planéité (44) de la deuxième plaquette (26), de manière que, selon le sens de déplacement du levier oscillant (10) à partir de ladite position neutre, le passage d'échappement (20) ou le passage d'admission (19) de la deuxième plaquette soit relié respectivement à l'échappement ou à l'alimentation, d'abord par l'extrémité distale de la rainure correspondante (43, 42) puis, pour une déviation croissante du levier oscillant (10) par rapport à sa position neutre, par une portion croissante du débouché de la rainure (43, 42) jusqu'à une liaison directe par son débouché sur la face à haute planéité (41) de la première plaquette (14).

2. Valve selon la revendication 1, caractérisée en ce que la deuxième plaquette (26) est montée dans le levier oscillant (10) en formant piston sur un joint annulaire d'étanchéité (15) par sa face opposée à la surface à haute planéité (44) et de façon sensiblement centrée, et comporte un passage transversal d'amenée (27) débouchant d'un côté au fond de la rainure en creux fermée (45), ménagée sur la surface à haute planéité (44) et, de l'autre côté, à l'intérieur dudit joint annulaire (15), de manière que la pression de fluide d'alimentation repousse la deuxième plaquette (26), par sa section "de piston" à l'intérieur du joint annulaire (15), au contact de la première plaquette (14).

3. Valve selon la revendication 2, caractérisée en ce qu'un ressort hélicoïdal d'application permanente (24) est interposé entre la face "de piston" de la deuxième plaquette (26) et une face d'appui (fond 30a) ménagée sur le levier oscillant (10) à l'intérieur d'une chambre de piston (30) dudit levier.

4. Valve selon la revendication 2 ou 3, caractérisée en ce que ladite rainure en creux fermée (45) présente la forme générale d'un "L" dont l'une (46) des branches est placée en face du débouché du passage d'alimentation (18) sur la face à haute planéité (44) de la deuxième plaquette (26) et dont l'autre branche (47) est reliée en permanence au passage transversal d'amenée (27) et est susceptible de venir se placer en face de la rainure (42) et du passage d'admission (19) sur la surface à haute planéité (41) de la première plaquette (14), lorsque le levier oscillant (10) est en position d'alimentation.

5. Valve selon l'une quelconque des revendications 1 à 4, caractérisée en ce que la face (14b) de la première plaquette (14) qui est opposée à ladite surface à haute planéité (41) est sensiblement plane et en appui sur un joint d'étanchéité plat en élastomère (15) comportant deux rainures intérieures fermées sur elles-mêmes: une première rainure (16) reliée, du côté du corps de valve (2), à un passage d'alimentation (21) en fluide sous pression et, du côté de la première plaquette (14), au passage d'alimentation (18) de cette première plaquette et une deuxième rainure (17) reliée, du côté du corps de valve (2), à un passage (52) vers l'organe d'utilisation (77 à 80) et, du côté de la première plaquette (14), aux passages d'admission (19) et d'échappement (20) de cette dernière.

6. Valve selon l'une quelconque des revendications 1 à 5, caractérisée en ce que le raccord de sortie (4) du corps de valve (2) vers l'organe d'utilisation (77 à 80) comporte un clapet anti-retour (70) à lèvres élastomères (71, 72) s ouvrant vers l'organe d'utilisation (77 à 80) et un clapet anti-retour (54) taré par un ressort hélicoïdal (55) de pression résiduelle et s'ouvrant vers le retour à l'échappement via le passage d'échappement (20) ménagé à travers la première plaquette (14).

7. Valve selon l'une quelconque des revendications 1 à 6, caractérisée en ce qu'au moins l'une des rainures longitudinales (42, 43) du passage d'alimentation (19) ou du passage d'échappement (20) comporte, sur une largeur sensiblement constante, une partie distale (par rapport audit passage) de profondeur sensiblement constante (42a, 43a) et une partie proximale (42b, 43b) de profondeur croissante jusqu'au raccordement avec ledit passage (19, 20).

8. Valve selon l'une quelconque des revendications 1 à 6, caractérisé en ce qu'au moins l'une des rainures longitudinales (42, 43) du passage d'alimentation ou du passage d'échappement (19, 20) présente, en direction dudit passage, une profondeur croissante et, le cas échéant, une largeur croissante, au moins à partir d'une certaine distance dudit passage.

9. Valve selon l'une quelconque des revendications 1 à 6, et 8, caractérisée en ce qu'au moins l'une des rainures longitudinales (42, 43) du passage d'alimentation ou du passage d'échappement (19, 20) présente une profondeur nulle ou très faible à son extrémité distale (42c, 43c) (par rapport audit passage).

10. Valve selon l'une quelconque des revendications 1 à 9, destinée à être associée à au moins un coussin de suspension, caractérisée en ce que le passage d'échappement (20) ménagé à travers la première plaquette (14) présente une section transversale nettement plus importante que celle du passage d'admission (19) de cette première plaquette, de manière à obtenir un débit maximal d'échappement courant nettement plus élevé que le débit d'alimentation.

11. Valve selon l'une quelconque des revendications 1 à 10, caractérisée en ce que la première (14) et la deuxième (26) plaquettes sont réalisées en un matériau céramique formé ou moulé et dont les surfaces à haute planéité (41, 44) sont rectifiées et/ou rodées au poli-miroir en rectification et/ou rodage plan sensiblement parallèle à la face d'appui plane opposée (14b, 26b).

12. Valve selon la revendication 11, caractérisée en ce qu'au moins l'un des surfaces à haute planéité (41, 44) de la première (14) ou de la deuxième (26) plaquette comporte une rainure en creux (90), qui est orientée de façon sensiblement parallèle au trajet de déplacement de la deuxième plaquette (26) au cours du pivotement du levier oscillant, qui est disposée dans une zone où elle ne rencontre pas, au cours dudit pivotement, d'orifice débouchant sur l'autre surface à haute planéité et qui débouche vers l'extérieur, de manière à constituer une rainure de collecte des fuites susceptible de se produire au contact entre lesdits surfaces à haute planéité.

13. Valve selon l'une quelconque des revendications 1 à 12, caractérisée en ce que le corps de valve (2), le levier oscillant (10) et un couvercle de fermeture (6) assemblé sur le corps sont réalisés en matière plastique, résistante aux ultraviolets et à l'effet de l'eau et des sels de déneigement, par exemple en polyéthylène, qui est moulée de façon très fortement nervurée en conservant des épaisseurs de matière sensiblement constantes pour supprimer les effets de retrait et en ce qu'un soufflet élastique étanche (39) est interposé entre un rebord (40) du corps de valve assemblé (2, 6) et le levier d'actionnement (33) et se prolonge par des languettes de fermeture souples (39a) appliquées élastiquement sur des passages d'échappement (85, 87).

14. Gamme de valves de nivellement pour suspensions pneumatiques qui consistent en valves selon l'une quelconque des revendications 1 à 13, caractérisée en ce que chaque valve de nivellement est constituée d'éléments standard à l'exception de la première plaquette (14) qui comporte des passages transversaux (18, 19, 20) et des rainures longitudinales (42, 43) spécifiques à l'usage auquel est destiné à la valve.

15. Gamme de valves selon la revendication 14, caractérisée en ce que la première plaquette (14) de chaque valve comporte un passage d'alimentation (18), une rainure (42) et un passage d'admission (19) standards et un passage (20) et une rainure (43) d'échappement usinés par perçage ou alésage et, respectivement, par fraisage ou meulage, à un diamètre et, respectivement, à une profondeur et, le cas échéant, à une largeur spécifiques du type de suspension pneumatique pour laquelle elle est utilisée.

16. Gamme de valves selon la revendication 14, caractérisée en ce que la première plaquette (14) de chaque valve comporte au moins une rainure longitudinale (42, 43) du passage d'alimentation ou du passage d'échappement (19, 20) usinée à la fraise ou à la meule disque et traversant le débouché du passage (19, 20) pour venir s'engager sur une faible longueur du côté opposé à la rainure longitudinale et constituer une rainure secondaire (42d).

17. Système de suspension pneumatique comprenant divers coussins de suspension pneumatique dont la pression est contrôlée par une valve de nivellement, caractérisé en ce qu'il comporte, pour chaque coussin de suspension, une valve de nivellement selon l'une quelconque des revendications 1 à 13 et dans laquelle la première plaquette de distribution (14) est spécifique du type de coussin de suspension contrôlé en ce qu'elle présente des passages d'alimentation (19) et d'échappement (20) et des rainures associées (42, 43) usinés ou moulés à des dimensions en correspondance avec le type de coussin de suspension contrôlé par la valve.

## Claims

1. Valve for discharging and supplying fluid from and to a utilization element, especially a leveling valve (1) for at least one pneumatic suspension pad or cushion (77 to 80), comprising in a body (2): an oscillating lever (33) carrying a second distribution plate (26), one projecting and highly plane surface (26a) of which bears in a sealed manner against the conjugated projecting and highly plane surface (14a) of a first distribution plate (14) mounted in the body (2) and through which a connection is established, via passages (18, 19, 20) opening onto the highly plane surface (14a) of the first plate (14), as a function of the position of the oscillating arm (33) on either side of a neutral position which isolates the utilization element, between said utilization element and the supply or discharge side, the outlets from the supply (20) and discharge (19) passages at the said projecting surface that bears in a sealed manner each being linked to a groove (42, 43) characterized in that the first plate (14) comprises three transverse passages (18, 19, 20) connected respectively, at the face (14b) of said plate opposite the highly plane surface (41), in the case of the one called the supply passage (18), to a source of fluid under pressure (3), and in the case of the other two, respectively called the inlet passage (19) and discharge passage (20), to the utilization element (77 to 80); and in that the said other two passages (19, 20), where they open onto the said highly plane surface, are each connected laterally to said channel (42, 43) which takes the form of an open longitudinal channel on the said surface, of lesser width than the diameter of the passage to which it is connected, and which is oriented substantially parallel to the displacement path of the second plate (26) as the oscillating lever (10) pivots, the first channel (42) of the supply passage (19) extending in the direction opposite to the second channel (43) of the discharge passage (20) and being capable of arriving opposite a channel (45) recessed into the highly plane surface (44) of the second plate (26) and permanently connected to the supply passage (18) where the latter opens onto the highly plane surface (41) of the first plate ( 14), while the second channel (43) is capable of arriving, alternately with the first channel (42) and after passage of a lateral defining edge (49) of the highly plane surface of the first plate, opposite a space (49b) connected to the discharge side between the highly plane surface (41) of the first plate (14) and a recessed surface (49a) of the said highly plane surface (44) of the second plate (26), such that, depending on the displacement direction of the oscillating lever (10) starting from the said neutral position, the discharge passage (20) or the supply passage (19) of the second plate is connected respectively to the discharge side or supply side, first through the distal extremity of the corresponding channel (43, 42) and then, as the oscillating lever (10) increasingly deviates from its neutral position, through an increasing portion of the outlet from channel (43, 42), until it is directly connected at its opening to the highly plane surface (41) of the first plate (14).

2. Valve according to Claim 1, characterized in that the second plate (26) is mounted in the oscillating lever (10) forming a piston on an annular gasket (15) by means of its face opposite the highly plane surface (44) and in a substantially centered manner, and comprises a transverse feed passage (27) opening at one end onto the bottom of the closed recessed channel (45) provided on the highly plane surface (44), and at the other end into the interior of said annular gasket (15), such that the supply fluid pressure pushes the second plate (26), by means of its "piston" section inside the annular gasket (15), into contact with the first plate (14).

3. Valve according to Claim 2, characterized in that a permanently applied helical spring (24) is interposed between the "piston" face of the second plate (26) and a support face (bottom 30a) provided on the oscillating lever (10) inside a piston chamber (30) of the said lever.

4. Valve according to Claim 2 or 3, characterized in that the said closed recessed channel (45) has the general shape of an "L" one (46) of whose branches is placed opposite the opening of the supply passage (18) on the highly plane surface (44) of the second plate (26), the other branch (47) of which is permanently connected to the transverse feed passage (27) and is capable of moving to a position opposite the inlet passage (19) and channel (42) on the highly plane surface (41) of the first plate (14) when the oscillating lever (10) is in the supply position.

5. Valve according to any one of Claims 1 to 4, characterized in that the face (14b) of the first plate (14) that is opposite the said highly plane surface (41) is substantially plane and bears on a flat elastomer gasket (15) comprising two internal channels closed in on themselves: a first channel (16) connected at the valve body (2) end to a passage (21) supplying fluid under pressure and at the first plate (14) end to the supply passage (18) of this first plate, and a second channel (17) connected at the valve body (2) end to a passage (52) leading to the utilization element (77 to 80) and at the first plate (14) end to the inlet (19) and discharge (20) passages of the latter.

6. Valve according to any one of Claims 1 to 5, characterized in that the outlet connector (4) of the valve body (2) leading to the utilization element (77 to 80) comprises a non-return flap valve (70) with elastomeric lips (71, 72) opening toward the utilization element (77 to 80) and a non-return flap valve (54) which is biased by a residual-pressure helical spring (55) and opens toward the discharge return via the discharge passage (20) passing through the first plate (14).

7. Valve according to any one of Claims 1 to 6, characterized in that at least one of the longitudinal channels (42, 43) of the supply passage (19) or of the discharge passage (20) comprises, over a substantially constant width, a distal (with respect to the said passage) part of substantially constant depth (42a, 43a) and a proximal part (42b, 43b) whose depth increases up to the connection with the said passage (19, 20).

8. Valve according to any one of Claims 1 to 6, characterized in that at least one of the longitudinal channels (42, 43) of the supply passage or of the discharge passage (19, 20) can have, in the direction of the said passage, an increasing depth and, if applicable, an increasing width, at least starting at a certain distance from said passage.

9. Valve according to any one of Claims 1 to 6, and 8, characterized in that at least one of the longitudinal channels (42, 43) of the supply passage or the discharge passage (19, 20) has a depth that is zero or very small at its distal end (42c, 43c) (with respect to the said passage).

10. Valve according to any one of Claims 1 to 9, intended to be associated with at least one suspension pad or cushion, characterized in that the discharge passage (20) passing through the first plate (14) has a transverse section that is distinctly greater than that of the inlet passage (19) of this first plate, such as to produce a normal maximum discharge flow rate that is distinctly higher than the supply flow rate.

11. Valve according to any one of Claims 1 to 10, characterized in that the first (14) and second (26) plates are made of a shaped or molded ceramic material, the highly plane surfaces (41, 44) of which are precision ground and/or lapped to a mirror polish by plane precision grinding and/or lapping substantially parallel to the opposite plane support face (14b, 26b).

12. Valve according to Claim 11, characterized in that at least one of the highly plane surfaces (41, 44) of the first (14) or the second (26) plate comprises a recessed channel (90) which is oriented substantially parallel to the displacement path of the second plate (26) during pivoting of the oscillating lever, which is arranged in a region where, during said pivoting, it does not encounter the orifice which opens onto the other highly plane surface and opens toward the outside, so as to constitute a collecting channel for leaks which might occur at the contact between the said highly plane surfaces.

13. Valve according to any one of Claims 1 to 12, characterized in that the valve body (2), the oscillating lever (10), and a sealing cover (6) assembled onto the body are made of a plastics material that is resistant to ultraviolet radiation and to the effect of water and snow-removal salts, for example polyethylene, which is molded in a highly ribbbed fashion while keeping the material thicknesses substantially constant to eliminate shrinkage effects, and in that a sealed elastic bellows (39) is interposed between a flange (40) of the assembled valve body (2, 6) and the actuation lever (33), and extends into flexible closure tabs (39a) applied in a yielding fashion against the discharge passages (85, 87).

14. Series of leveling valves for pneumatic suspensions consisting of valve elements according to any one of Claims 1 to 13, characterized in that each leveling valve consists of standard elements, with the exception of the first plate (14) which comprises transverse passages (18, 19, 20) and longitudinal channels (42, 43) specific to the use for which the valve is intended.

15. Series of valves according to Claim 14, characterized in that the first plate ( 14) of each valve comprises a supply passage (18), channel (42) and inlet passage (19) that are standard, and a discharge passage (20) and channel (43) machined by drilling or boring and by milling or grinding, respectively, to a diameter and a depth, respectively, and, if applicable, a width specific to the type of pneumatic suspension for which it is used.

16. Series of valves according to Claim 14, characterized in that the first plate ( 14) of each valve comprises at least one longitudinal channel (42, 43) of the supply passage or the discharge passage (19, 20) that is machined with a milling cutter or a grinding disk and that crosses the opening of the passage (19, 20) and engages over a small length of the side opposite the longitudinal channel and constitutes a secondary channel (42d).

17. Pneumatic suspension system comprising a plurality of pneumatic suspension pads or cushions whose pressure is controlled by a leveling valve, characterized in that it contains, for each suspension pad, a leveling valve according to any one of Claims 1 to 13 in which the first distribution plate (14) is specific to the type of suspension pad being controlled, in that it has supply (19) and discharge (20) passages and associated channels (42, 43) that are molded or machined to dimensions corresponding to the type of suspension pad controlled by the valve.

## Patentansprüche

1. Fluidausstoß- und Zufuhrventil von und zu einer Verwendungseinrichtung, insbesondere Nivelierventil (1) für zumindest ein pneumatisches Federungskissen (77 - 80), umfassend in einem Gehäuse (2): einen schwenkbaren Hebel (33), welcher eine zweite Verteilerplakette (26) trägt, von welcher eine vorspringende Fläche mit hoher Planarität (26a) dicht anliegt an der entsprechenden vorspringenden Fläche mit hoher Planarität (14a) einer ersten Verteilerplakette (14), welche in dem Gehäuse (2) angeordnet ist, und durch welche hindurch gebildet wird, über Durchgänge (18, 19, 20), welche an der Fläche mit hoher Planarität (14a) der ersten Plakette (14) münden, und zwar als Funktion der Position des schwenkbaren Armes (33) beidseitig einer neutralen Position, welche die Verwendungseinrichtung isoliert, die Verbindung der Verwendungseinrichtung mit der Zufuhr bzw. dem Ausstoß, wobei die Öffnungen der Zufuhrdurchgänge (20) und der Ausstoßdurchgange (19) an der vorspringenden Fläche und in dichter Anlage jeweils verbunden sind mit einer Rille (42, 43), dadurch gekennzeichnet, daß die erste Plakette (14) drei transversale Durchgänge (18, 19, 20) aufweist, welche an der Fläche (14b) der Plakette, gegenüberliegend der Fläche mit hoher Planarität (41) jeweils verbunden sind, für den Zufuhrduchgang (18) benannten mit einer Quelle von unter Druck stehendem Fluid (3), und für die zwei anderen welche Ansaugdurchgang (19) und Ausstoßdurchgang (20) genannt werden mit der Verwendungseinrichtung (77-80), und daß die zwei anderen Durchgänge (19, 20) an ihrer Öffnung an der Fläche mit hoher Planarität jeweils lateralwärts mit der Rille (42, 43) verbunden sind, welche gebildet ist durch eine longitudinale Rille, welche an der Fläche mündet und zwar mit einer geringeren Breite als der Durchmesser des Durchganges mit dem sie verbunden ist, und welche in praktisch paralleler Weise bezüglich dem Pfad der Versetzung der zweiten Plakette (26) während dem Schwenken des schwenkbaren Hebels (10) ausgerichtet ist, wobei sich die erste Rille (42) des Zufuhrdurchganges (19) in der entgegengesetzten Richtung bezüglich der zweiten Rille (43) des Ausstoßdurchganges (20) erstreckt und in der Lage ist gegenüber einer Hohlrille (45) angeordnet zu werden, welche an der Fläche mit hoher Planarität (44) der zweiten Plakette (26) ausgebildet ist, und welche permanent mit dem Zufuhrdurchgang (18) an der Öffnung der letzteren an der Flache mit hoher Planarität (41) der ersten Plakette (14) verbunden ist, während die zweite Rille (43) in der Lage ist, alternierend mit der ersten Rille (42) und nach Durchgang eines lateralen Abgrenzungssteges (49) der Fläche mit hoher Planarität der ersten Plakette gegenüber einem Raum (49b) angeordnet zu werden, und zwar angeordnet zum Ausstoßen zwischen der Fläche mit hoher Planarität (42) der ersten Plakette (14) und einer rückspringenden Fläche (49a) der Fläche mit hoher Planarität (44) der zweiten Plakette (26) so daß gemäß der Versetzungsrichtung des schwenkbaren Hebels (10), ausgehend von der neutralen Position der Ausstoßdurchgang (20) oder der Ansaugdurchgang (19) der zweiten Plakette jeweils verbunden wird mit dem Ausstoß oder der Zufuhr, und zwar zuerst durch das distale Ende der entsprechenden Rille (43, 42), und nachfolgend für eine ansteigende Auslenkung des schwenkbaren Hebels (10) bezüglich seiner neutralen Position durch einen sich vergrößernden Abschnitt der Öffnung der Rille (43, 42), und zwar bis eine direkte Verbindung besteht über ihre Öffnung an der Fläche mit hoher Planarität (41) der ersten Plakette (14).

2. Ventil nach Anspruch 1, dadurch gekennzeichnet, daß die zweite Plakette (26) in dem schwenkbaren Hebel (10) montiert ist, wobei sie einen Kolben auf einer ringförmigen Dichtungsdichtung (15) durch ihre Fläche, gegenüberliegend der Fläche mit hoher Planarität (44) bildet, und zwar in praktisch zentrierter Weise, und einen transversalen Zulaufdurchgang (27) aufweist, welcher einerseits an dem Boden der geschlossenen Hohlrille mündet, welche an der Fläche mit hoher Planarität (44) gebildet ist, und andererseits am Inneren der ringförmigen Dichtung (15), so daß der Druck des Zufuhrfluides die zweite Plakette (26) über ihren Kolbenabschnitt im Inneren der ringförmigen Dichtung (15) zurückdrangt in Kontakt mit der ersten Plakette (14).

3. Ventil nach Anspruch 2, dadurch gekennzeichnet, daß eine permanent wirkende Spiralfeder (24) zwischengelagert ist, zwischen der "Kolbenfläche" der zweiten Plakette (26) und einer Auflagefläche (Boden 30a) ausgebildet an dem schwenkbaren Hebel (10) im Inneren einer Kolbenkammer (30) des Hebels.

4. Ventil nach Anspruch 2 oder 3, dadurch gekennzeichnet, daß die geschlossene Hohlrille (45) die generelle Form eines "L" aufweist, wovon ein Ast (46) gegenüber der Öffnung des Zufuhrdurchganges (18) an der Fläche mit hoher Planarität (44) der zweiten Plakette (26) angeordnet ist, wobei deren anderer Ast (47) permanent mit dem transversalen Zulaufdurchgang (27) verbunden ist, und in der Lage ist, gegenüber der Rille (42) und des Ansaugdurchganges (19) an der Fläche mit hoher Planarität (41) der ersten Plakette (14) angeordnet zu werden, wenn der schwenkbare Hebel (10) sich in der Zufuhrposition befindet.

5. Ventil gemäß einem der Ansprüche 1 bis 4, dadurch gekennzeichnet, daß die Fläche (14b) der ersten Plakette (14), welche gegenüberliegend der Fläche mit hoher Planarität (41) ist, praktisch eben und anliegend an einer flachen Dichtungsdichtung aus Elastomer (15) ist, umfassend zwei in sich geschlossene innere Rillen: einer ersten Rille (16), welche an der Seite des Ventilkörpers (12) mit einem Zufuhrdurchgang (21) für Fluid unter Druck verbunden ist, und an der Seite der ersten Plakette (14) mit dem Zufuhrdurchgang (18) der ersten Plakette, und eine zweite Rille (17), welche an der Seite des Ventilkörpers (2) mit einem Durchgang (52) hin zu der Verwendungseinrichtung (77-80) und an der Seite der ersten Plakette (14) mit Ansaugdurchgängen (19) und Ausstoßdurchgängen (20) der letzteren verbunden ist.

6. Ventil gemaß einem der Ansprüche 1 bis 5, dadurch gekennzeichnet, daß die Ausgangsverbindung (4) des Ventilkörpers (2) hin zu der Verwendungseinrichtung (77-80) eine Rückschlagklappe (70) mit elastomeren Lippen (71, 72) aufweist, welche sich hin zu der Verwendungseinrichtung (77-80) öffnet und eine Rückschlagklappe (54), welche über eine Spiralfeder (55) mit Restspannung geeicht ist, und sich zu dem Rücklauf beim Ausstoßen über den Ausstoßdurchgang (20) öffnet, welcher durch die erste Plakette (14) ausgebildet ist.

7. Ventil nach einem der Ansprüche 1 bis 6, dadurch gekennzeichnet, daß zumindest eine der longitudinalen Rillen (42, 43) des Zufuhrdurchganges (19) oder des Ausstoßdurchganges (20) aufweist bei einer praktisch konstanten Breite, einen distalen Abschnitt (bezüglich des Durchganges) mit praktisch konstanter Tiefe (42a, 43a) und einem proximalen Abschnitt (42b, 43b) mit ansteigender Tiefe bis zur Verbindung mit dem Durchgang (19, 20).

8. Ventil nach einem der Ansprüche 1 bis 6, dadurch gekennzeichnet, daß zumindest eine der longitudinalen Rillen (42, 43) des Zufuhrdurchganges oder des Ausstoßdurchganges (19, 20) aufweist, in Richtung des Durchganges eine ansteigende Tiefe, und ansonsten eine ansteigende Breite, und zwar zumindest ab einem bestimmten Abstand von dem Durchgang.

9. Ventil nach einem der Ansprüche 1 bis 6 und 8, dadurch gekennzeichnet, daß zumindest eine der longitudinalen Rillen (42, 43) des Zufuhrdurchganges oder des Ausstoßdurchganges (19, 20) keine Tiefe oder eine sehr geringe Tiefe an ihrem distalen Ende (42c, 43c) (mit Bezug auf den Durchgang) aufweist.

10. Ventil nach einem der Ansprüche 1 bis 9, vorgesehen zumindest einem Aufhängungs- bzw. Federungskissen zugeordnet zu werden, dadurch gekennzeichnet, daß der Ausstoßdurchgang (20), welcher durch die erste Plakette (14) ausgebildet ist, einen deutlich größeren Querschnitt aufweist als der Ansaugdurchgang (19) dieser ersten Plakette, so daß eine maximale Ausstoßflußmenge erhalten wird, welche deutlich größer ist als die Zufuhrmenge.

11. Ventil nach einem der Ansprüche 1 bis 10, dadurch gekennzeichnet, daß die erste Plakette (14) und die zweite Plakette (26) gebildet sind aus einem keramischen Material, welches geformt oder gegossen ist, und deren Flächen mit hoher Planarität (41, 44) geglättet und/oder eingefahren sind mittels Spiegelpolierung in dar Rektifizier- und/oder Einfahrebene, welche praktisch parallel zu der ebenen gegenüberliegenden Auflageflache (14b, 26b) ist.

12. Ventil nach Anspruch 11, dadurch gekennzeichnet, daß zumindest eine der Flächen mit hoher Planarität (41, 44) der ersten Plakette (14) oder der zweiten Plakette (26) eine Hohlrille (90), welche in praktisch paralleler Weise bezüglich des Versetzungspfades der zweiten Plakette (26) während dem Schwenken des schwenkbaren Hebels ausgerichtet ist, welcher angeordnet ist in einer Zone, wo sie während dem Schwanken keine Öffnung trifft, welche zu der anderen Fläche mit hoher Planarität mündet, und welche zum Äußeren mündet, so daß eine Sammelrille für Leckagen gebildet ist, welche auftreten können beim Kontakt zwischen den Flächen mit hoher Planarität.

13. Ventil nach einem der Ansprüche 1 bis 12, dadurch gekennzeichnet, daß der Ventilkörper (2), der schwenkbare Hebel (10) und ein Verschlußdeckel (6) angeordnet an dem Körper aus Kunststoffmaterial ausgebildet sind, beständig gegen Ultraviolettstrahlung und die Wirkung von Wasser und Schmelzsalz, z.B. aus Polyethylen, welches gegossen bzw. geformt ist mit sehr starken Riefen, wobei Dicken beibehalten werden, welche im wesentlichen konstant sind, um die Wirkung des Schrumpfens zu eliminieren, und daß ein elastischer Dichtbalg (39) zwischengelagert ist zwischen dem Rand (40) des Körpers der Ventilanordnung (2, 6) und dem Betätigungshebel (33), und sich über weiche Verschlußzungen (39a) erstreckt, welche elastisch an des Ausstoßdurchgängen (85, 87) anliegen.

14. Nivelierventilanordnung zur pneumatischen Aufhängung bzw. Federung` welche aus Ventilen besteht gemäß einem der Ansprüche 1 bis 13, dadurch gekennzeichnet, daß jedes Nivelierventil aus Standardelementen gebildet ist, mit Ausnahme der ersten Plakette (14), welche transversale Durchgänge (18, 19, 20) und longitudinale Rillen (42, 43) aufweist, und zwar spezifisch für die Verwendung, für welche das Ventil bestimmt ist.

15. Ventilanordnung nach Anspruch 14, dadurch gekennzeichnet, daß die erste Plakette (14) an jedem Ventil einen Zufuhrdurchgang (18), eine Rille (42) und einen Ansaugdurchgang (19) als Standard aufweist, und einen Ausstoßdurchgang (20) und eine Ausstoßrille (43), welche gebildet sind durch Bohren bzw. Spanen, und jeweils durch Fräsen oder Schleifen mit einem Durchmesser, und jeweils einer Tiefe und gegebenenfalls einer Breite, welche spezifisch für den pneumatischen Aufhängungstyp sind für welche das Ventil verwendet wird.

16. Ventilanordnung nach Anspruch 14, dadurch gekennzeichnet, daß die erste Plakette (14) von jedem Ventil zumindest eine longitudinale Rille (42, 43) des Zufuhrdurchganges oder des Ausstoßdurchganges (19, 20) aufweist, welche Rille mittels einer Fräse oder einer Schleifscheibe gebildet ist, und die Öffnung des Durchganges (19, 20) durchquert, um auf einer geringen Länge gegenüberliegend der longitudinalen Rille einzugreifen und eine Sekundärrille (42d) zu bilden.

17. Pneumatisches Aufhängungs- bzw. Federungssystem, umfassend verschiede pneumatische Federungskissen, deren Druck gesteuert wird durch ein Nivelierventil, dadurch gekennzeichnet, daß es für jedes Federungskissen, ein Nivelierventil nach einem der Ansprüche 1 bis 13 aufweist, und in welchem die erste Verteilerplakette (14) spezifisch für den Federkissentyp ist, welches dadurch gesteuert wird, daß es Zufuhrdurchgänge (19) und Ausstoßdurchgänge (20), und zugeordnete Rillen (42, 43) aufweist, welche ausgebildet oder geformt bzw. gegossen sind in Dimensionen, entsprechend dem Typ des Federungskissens, welches durch das Ventil gesteuert wird.
